# EUROPEAN PATENT APPLICATION

(11) **EP 2 194 094 A1**
(43) Date of publication of application: **09.06.2010**
(21) Application number: 08170967.7
(22) Date of filing: 08.12.2008
(51) Int. Cl.: C08L 27/12

(54) **(Per)fluoroelastomer composition**

(71) Applicant: Solvay Solexis S.p.A., 20021 Bollate (MI) (IT)
(72) Inventor: Stanga, Milena, 21040, Origgio (VA) (IT); Manzoni, Claudia, 40133, Bologna (IT); Comino, Giovanni, 20052, MONZA (MB) (IT); Albano, Margherita, 20131, Milano (IT)
(74) Representative: Benvenuti, Federica

(57) **Abstract**

The invention pertains to a (per)fluoroelastomer composition comprising at least one (per)fluoroelastomer [(per)fluoroelastomer (A)] matrix comprising particles of at least one perfluoropolymer [polymer (F)] having a melt flow index (MFI), measured at 372°C under a 5 Kg load according to ASTM D1238 standard, of less than 10 g/10 min, said particles having an average size of less than 100 nm.

## Description

### Technical Field

This invention pertains to (per)fluoroelastomer compositions comprising particles of certain perfluoropolymers, to a process for their manufacture and to the use of the same for the manufacture of cured articles.

### Background Art

Vulcanized (per)fluoroelastomers are materials with excellent heat-resistance and chemical-resistance characteristics, which are generally used in the manufacture of technical articles such as sealing parts, pipes, oil seals and O-rings in which the leaktightness, the mechanical properties and the resistance to substances such as mineral oils, hydraulic fluids, solvents or chemical agents of diverse nature must be ensured over a wide range of working temperatures, from low to high temperatures.

A continuing need for (per)fluoroelastomers with improved leaktightness combined with improved mechanical properties (i.e. stress at break, modulus and elongation at break) exists.

One of the approaches for obtaining such results is the use of fillers dispersed in the (per)fluoroelastomer matrix. However, when the filler used is carbon black, in particular when it is used at high concentrations, instead of an improvement in the stress at break and in the modulus (in other words, of the stiffness of the material), a decline in the leaktightness and elongation at break properties (typical of elastic behaviour) is observed. The use of polymeric fillers, in particular based on thermoplastic polymers based on tetrafluoroethylene (TFE), has made it possible to partially overcome such drawbacks.

Thus, US 6395834 (AUSIMONT S.P.A.) 28.05.2002 , US 6310142 (AUSIMONT S.P.A.) 30.10.2001 and US 6822050 (AUSIMONT S.P.A.) 23.11.2004 disclose compositions comprising a fluoroelastomer matrix incorporating therein particles of a homopolymer or copolymer of tetrafluoroethylene (TFE) having an average particle size of from 10 to 100 nm.

US 6310141 (DYNEON) 30.10.2001 discloses latex-blended or core-shell compositions comprising a fluoroelastomer and a fluoroplastic having a melting point of at least 100°C, generally having an MFI of 1-30 g/10 min (at 372°C/5 kg). In particular, ex. 3 discloses a composition comprising a fluoroelastomer and a TFE/PAVE fluoroplastomer having a MFI of 2.2 g/10 min (@ 372°C/5 kg).

US 6734254 (3M INNOVATIVE PROPERTIES) 11.05.2004 discloses co-curable latex-blended compositions comprising peroxide-curable fluoroelastomer and fluoroplastomer comprising iodine and/or bromine, said fluoroplastic having an MFI no greater than 5 g/10 min and/or an average particle size greater than 100 nm. An average particle size exceeding 100 nm is taught as an essential feature for obtaining the advantages of the invention.

Nevertheless, for even more demanding and extreme applications, need is still felt for further improvement of mechanical properties, in particular of modulus computed at 100 % elongation (which is representative of actual modulus of the gum during its normal operations), without affecting sealing and leaktightness behaviour.

The Applicant has found that it is advantageously possible to fulfil these needs by providing (per)fluoroelastomer compositions comprising well-defined polymeric fillers as below detailed.

### Disclosure of Invention

It is thus an object of the invention a (per)fluoroelastomer composition comprising at least one (per)fluoroelastomer [(per)fluoroelastomer (A)] matrix comprising particles of at least one perfluoropolymer [polymer (F)] having a melt flow index (MFI), measured at 372°C under a 5 Kg load according to ASTM D1238 standard, of less than 10 g/10 min, said particles having an average size of less than 100 nm.

The Applicant has surprisingly found that only the appropriate selection of perfluoropolymer filler particles having simultaneously an high molecular weight (i.e. a MFI of less than 10 g/10 min, as above detailed) and nanometric size (i.e. an average particle size (APS) of less than 100 nm) advantageously provides for a significant improvement in mechanical properties of (per)fluoroelastomer composition thereof, as evidenced, notably, by an increased modulus at 100 % elongation and elastic modulus/elongation at break ratio, without detrimental effect on compression set and, more generally speaking, sealing properties.

For the purposes of this invention, the term "(per)fluoroelastomer" [elastomer (A)] is intended to designate a fluoropolymer resin serving as a base constituent for obtaining a true elastomer, said fluoropolymer resin comprising more than 10 % wt, preferably more than 30 % wt, of recurring units derived from at least one ethylenically unsaturated monomer comprising at least one fluorine atom (hereafter, (per)fluorinated monomer).

True elastomers are defined by the ASTM, Special Technical Bulletin, No. 184 standard as materials capable of being stretched, at room temperature, to twice their intrinsic length and which, once they have been released after holding them under tension for 5 minutes, return to within 10 % of their initial length in the same time.

Non limitative examples of suitable (per)fluorinated monomers are notably:
- C₂-C₈ fluoro- and/or perfluoroolefins, such as tetrafluoroethylene (TFE), hexafluoropropene (HFP), pentafluoropropylene, and hexafluoroisobutylene;
- C₂-C₈ hydrogenated monofluoroolefins, such as vinyl fluoride; 1,2-difluoroethylene, vinylidene fluoride (VDF) and trifluoroethylene (TrFE);
- (per)fluoroalkylethylenes complying with formula CH₂=CH-R_{f0}, in which R_{f0} is a C₁-C₆ (per)fluoroalkyl or a C₁-C₆ (per)fluorooxyalkyl having one or more ether groups ;
- chloro- and/or bromo- and/or iodo-C₂-C₆ fluoroolefins, like chlorotrifluoroethylene (CTFE);
- fluoroalkylvinylethers complying with formula CF₂=CFOR_{f1} in which R_{f1} is a C₁-C₆ fluoro- or perfluoroalkyl, e.g. -CF₃, -C₂F₅, -C₃F₇;
- hydrofluoroalkylvinylethers complying with formula CH₂=CFOR_{f1} in which R_{f1} is a C₁-C₆ fluoro- or perfluoroalkyl, e.g. -CF₃, -C₂F₅, -C₃F₇ ;
- fluoro-oxyalkylvinylethers complying with formula CF₂=CFOX₀, in which X₀ is a C₁-C₁₂ oxyalkyl, or a C₁-C₁₂ (per)fluorooxyalkyl having one or more ether groups, like perfluoro-2-propoxy-propyl;
- fluoroalkyl-methoxy-vinylethers complying with formula CF₂=CFOCF₂ OR_{f2} in which R_{f2} is a C₁-C₆ fluoro- or perfluoroalkyl, e.g. -CF₃, -C₂F₅, -C ₃F₇ or a C₁-C₆ (per)fluorooxyalkyl having one or more ether groups, like -C₂F₅-O-CF₃;
- functional fluoro-alkylvinylethers complying with formula CF₂=CFOY₀, in which Y₀ is a C₁-C₁₂ alkyl or (per)fluoroalkyl, or a C₁-C₁₂ oxyalkyl or a C₁-C₁₂ (per)fluorooxyalkyl, said Y₀ group comprising a carboxylic or sulfonic acid group, in its acid, acid halide or salt form;
- fluorodioxoles, of formula : 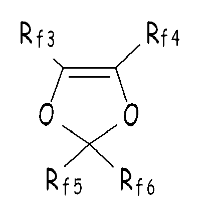
wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom, e.g. -CF₃, -C₂F₅, -C₃F₇, -OCF₃, -OCF₂CF₂OCF₃.

(Per)fluoroelastomers (A) are in general amorphous products or products having a low degree of crystallinity (crystalline phase less than 20 % by volume) and a glass transition temperature (Tg) below room temperature. In most cases, the (per)fluoroelastomer has advantageously a Tg below 10°C, preferably below 5°C, more preferably 0°C.

The (per)fluoroelastomer (A) is preferably selected among:
(1) VDF-based copolymers, in which VDF is copolymerized with at least one comonomer chosen from the followings classes :
   (a) C₂-C₈ perfluoroolefins , such as tetrafluoroethylene (TFE), hexafluoropropylene (HFP), hexafluoroisobutylene;
   (b) hydrogen-containing C₂-C₈ olefins, such as vinyl fluoride (VF),
      trifluoroethylene (TrFE), perfluoroalkyl ethylenes of formula CH₂ = CH-R_{f}, wherein R_{f} is a C₁-C₆ perfluoroalkyl group;
   (c) C₂-C₈ chloro and/or bromo and/or iodo-fluoroolefins such as chlorotrifluoroethylene (CTFE);
   (d) (per)fluoroalkylvinylethers (PAVE) of formula CF₂ = CFOR_{f}, wherein R_{f} is a C₁-C₆ (per)fluoroalkyl group, e.g. CF₃, C₂F₅, C₃F₇;
   (e) (per)fluoro-oxy-alkylvinylethers of formula CF₂ = CFOX, wherein X is a C₁-C₁₂ ((per)fluoro)-oxyalkyl comprising catenary oxygen atoms, e.g. the perfluoro-2-propoxypropyl group;
   (f) (per)fluorodioxoles having formula : 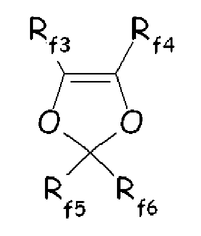 wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atom, such as notably -CF₃, -C₂F₅, -C₃F₇, -OCF₃, -OCF₂CF₂OCF₃; preferably, perfluorodioxoles;
   (g) (per)fluoro-methoxy-vinylethers (MOVE, hereinafter) having formula: CFX₂ = CX₂OCF₂OR"_{f}
      wherein R"_{f} is selected among C₁-C₆ (per)fluoroalkyls , linear or branched; C₅-C₆ cyclic (per)fluoroalkyls; and C₂-C₆ (per)fluorooxyalkyls, linear or branched, comprising from 1 to 3 catenary oxygen atoms, and X₂ = F, H; preferably X₂ is F and R"_{f} is -CF₂CF₃ (MOVE1); -CF₂CF₂OCF₃ (MOVE2); or -CF₃ (MOVE3);
   (h) C₂-C₈ non-fluorinated olefins (OI), for example ethylene and propylene; and
(2) TFE-based copolymers, in which TFE is copolymerized with at least one comonomer chosen from classes (c), (d), (e), (g), (h) as above detailed and the followings:
   (i) perfluorovinyl ethers containing cyanide groups, such as notably those described in patents US 4 281 092, US 5 447 993 and US 5 789 489.

Most preferred (per)fluoroelastomers (A) are those having following compositions (in mol %) :
(i) vinylidene fluoride (VDF) 35-85 %, hexafluoropropene (HFP) 10-45 %, tetrafluoroethylene (TFE) 0-30 %, perfluoroalkyl vinyl ethers (PAVE) 0-15 %;
(ii) vinylidene fluoride (VDF) 50-80 %, perfluoroalkyl vinyl ethers (PAVE) 5-50 %, tetrafluoroethylene (TFE) 0-20 %;
(iii) vinylidene fluoride (VDF) 20-30 %, C₂-C₈ non-fluorinated olefins (OI) 10-30 %, hexafluoropropene (HFP) and/or perfluoroalkyl vinyl ethers (PAVE) 18-27 %, tetrafluoroethylene (TFE) 10-30 %;
(iv) tetrafluoroethylene (TFE) 50-80 %, perfluoroalkyl vinyl ethers (PAVE) 20-50 %;
(v) tetrafluoroethylene (TFE) 45-65 %, C₂-C₈ non-fluorinated olefins (OI) 20-55 %, vinylidene fluoride 0-30 %;
(vi) tetrafluoroethylene (TFE) 32-60 % mol %, C₂-C₈ non-fluorinated olefins (OI) 10-40 %, perfluoroalkyl vinyl ethers (PAVE) 20-40 %, fluorovinyl ethers (MOVE) 0-30 %;
(vii) tetrafluoroethylene (TFE) 33-75 %, perfluoroalkyl vinyl ethers (PAVE) 15-45 %, vinylidene fluoride (VDF) 5-30 %, hexafluoropropene HFP 0-30 %;
(viii) vinylidene fluoride (VDF) 35-85 %, fluorovinyl ethers (MOVE) 5-40 %, perfluoroalkyl vinyl ethers (PAVE) 0-30 %, tetrafluoroethylene (TFE) 0-40 %, hexafluoropropene (HFP) 0-30 %;
(ix) tetrafluoroethylene (TFE) 20-70 %, fluorovinyl ethers (MOVE) 30-80 %, perfluoroalkyl vinyl ethers (PAVE) 0-50 %.

Optionally, (per)fluoroelastomer (A) of the present invention also comprises recurring units derived from a bis-olefin having general formula : 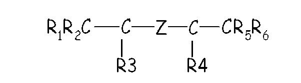 wherein R₁, R₂, R₃, R₄, R₅ and R₆, equal or different from each other, are H or C₁-C₅ alkyl; Z is a linear or branched C₁-C₁₈ alkylene or cycloalkylene radical, optionally containing oxygen atoms, preferably at least partially fluorinated, or a (per)fluoropolyoxyalkylene radical, e.g. as described in patent EP 661 304 in the name of the Applicant.

The (per)fluoroelastomer (A) can be prepared by any known method, such as emulsion or micro-emulsion polymerization, suspension or micro-suspension polymerization, bulk polymerization and solution polymerization.

Polymerization is usually carried out at a temperature between 25 and 150°C, under a pressure of up to 10 MPa.

The (per)fluoroelastomer (A) is preferably prepared by emulsion polymerization, in the presence of a radical generator. Suitable radical generators are notably the alkaline persulphates, perborates and percarbonates. It is also possible to employ a combination of peroxy generators with reducers, such as sulphites, bisulphites, metabisulphites, thiosulphates, phosphites or hyposulphites of alkaline metals or of ammonium, or copper (I) salts, Fe (II) salts, silver salts and other easily oxidizable metal salts. It is possible to use also organic radical generators, e.g. organic peroxides.

Suitable organic peroxides useful as radical generators can be selected in particular from:
(a) dialkylperoxides, wherein alkyl has from 1 to 12 carbon atoms, for instance diterbutylperoxide (DTBP);
(b) dialkylperoxydicarbonates, wherein the alkyl has from 1 to 12 carbon atoms, for instance diisopropylperoxydicarbonate:
(c) diacylperoxides, wherein acyl has from 2 to 12 carbon atoms, for instance diacetylperoxide;
(d) peroxyesters having from 3 to 20 carbon atoms, for instance terbutylperoxyisobutyrate.

The inventive composition comprises particles of at least one "perfluoropolymer" [polymer (F)], as above detailed.

For the purpose of the invention, the term "particle" is intended to denote a mass of material that has a definite three-dimensional volume and shape, characterized by three dimensions.

For the purpose of the invention, the term "perfluoropolymer" [polymer (F)] is intended to denote a fluoropolymer substantially free of hydrogen atoms.

The term "substantially free of hydrogen atom" is understood to mean that the perfluoropolymer consists essentially of recurring units derived from ethylenically unsaturated monomers comprising at least one fluorine atom and free of hydrogen atoms [perfluoromonomer (PFM)].

The perfluoropolymer is preferably melt-processable. For the purposes of the present invention, by the term "melt-processable" is meant that the perfluoropolymer can be processed (i.e. fabricated into shaped articles such as films, fibers, tubes, wire coatings and the like) by conventional melt extruding, injecting or casting means.

The melting point of the polymer (F) is preferably in the range from 200°C to 325°C, preferably from 250°C to 315°C.

The melting point of polymer (F) (Tm₂₎ is determined by Differential Scanning Calorimetry (DSC) at a heating rate of 10°C/min, according to ASTM D 3418 Standard.

It is essential that the melt flow index (MFI) of the polymer (F) is less than 10 g/10 min, preferably less than 8 g/10 min, more preferably less than 5 g/10 min, the MFI being measured at 372°C under a 5 Kg load according to ASTM D1238 standard method.

The lower limit of MFI is not particularly limited, provided that the polymer (F) still has a measurable MFI. In other words, it is generally preferred that the polymer (F) has a MFI of at least 0.01 g/10 min, preferably of at least 0.05g/10 min.

The Applicant has found that when the melt flow index of the polymer (F) exceeds 10 g/10 min, the addition of said polymer (F) in the composition does not provide for any synergistic effect for the improvement of mechanical properties, even when said polymer (F) fulfils the nanometric size requirement of the invention.

As per the average particle size of the polymer (F), it is also essential that the average particle size of the polymer (F) is of less than 100 nm.

The average particle size can be advantageously measured by small angle X-ray scattering method using an X-rays Microtrack particle analyzer according to ISO 13762.

The polymer (F) particles of the invention have an average particle size (APS) of advantageously at least 10 nm, preferably of at least 15 nm, more preferably of at least 20 nm.

The polymer (F) particles of the invention have an average particle size of advantageously at most 90 nm, preferably of at most 80 nm, more preferably of at most 70 nm.

Good results have been obtained with polymer (F) particles having an average particle size from 10 to 90 nm. Excellent results have been obtained with polymer (F) particles having an average particle size from 20 to 70 nm.

The Applicant has found that when the particles of the polymer (F) have an average particle size equal to or exceeding 100 nm, the addition of said polymer (F) particles in the composition does not provide for any synergistic effect for the improvement of mechanical properties, even when said polymer (F) fulfils the molecular weight requirement of the invention (i.e. MFI < 10 g/10 min).

The Applicant thinks, without being bound to this theory, that particles having an average particle size equal to or exceeding 100 nm interact with the fluoroelastomer matrix via reduced interface area/contact surface, so that possible advantages of an increased molecular weight polymer (F) filler are substantially lost.

The polymer (F) of the invention is preferably a tetrafluoroethylene (TFE) homopolymer or copolymer, preferably a TFE non-fibrillating homopolymer or a TFE copolymer.

The polymer (F) particles having the above nanometric sizes are obtainable notably by polymerization in aqueous microemulsion of perfluoropolyoxyalkylenes, as described for example in EP 969 027 in the name of the Applicant. Polymerization techniques in microemulsion wherein the oil phase is formed by polymerizable unsaturated monomers can also be used, as described in US 5 523 346 and US 5 616 648.

The term tetrafluoroethylene (TFE) copolymer is intended to encompass perfluoropolymers comprising recurring units derived from TFE and from at least one other perfluoromonomer (PFM) as above described different from TFE.

The polymer (F) of the invention is more preferably a TFE copolymer comprising advantageously at least 0.1 % by moles, preferably at least 0.5 % by moles, more preferably at least 1 % by moles of recurring units derived from the perfluoromonomer (PFM) different from TFE, with respect to the total moles of recurring units.

The polymer (F) of the invention is more preferably a TFE copolymer comprising advantageously at most 20 % by moles, preferably at most 10 % by moles, more preferably at most 7 % by moles of recurring units derived from the perfluoromonomer (PFM) different from TFE, with respect to the total moles of recurring units.

Perfluoromonomers (PFM) different from TFE are notably chosen among:
- C₃-C₈ perfluoroolefins, such as hexafluoropropene (HFP); chloro- and/or bromo- and/or iodo- C₂-C₆ per(halo)fluoroolefins, like chlorotrifluoroethylene (CTFE);
- per(halo)fluoroalkylvinylethers complying with general formula CF₂ =CFOR_{f3} in which R_{f3} is a C₁-C₆ per(halo)fluoroalkyl, such as -CF₃, -C₂F 5, -C₃F₇;
- per(halo)fluoro-oxyalkylvinylethers complying with general formula CF₂ =CFOX₀₁, in which X₀₁ is a C₁-C₁₂ per(halo)fluorooxyalkyl having one or more ether groups, like perfluoro-2-propoxy-propyl group;
- per(halo)fluoro-methoxy-alkylvinylethers complying with general formula CF₂=CFOCF₂OR_{f4} in which R_{f4} is a C₁-C₆ per(halo)fluoroalkyl, such as -CF₃, -C₂F₅, -C₃F₇ or a C₁-C₆ per(halo)fluorooxyalkyl having one or more ether groups, such as -C₂F₅-O-CF₃;
- per(halo)fluorodioxoles of formula : 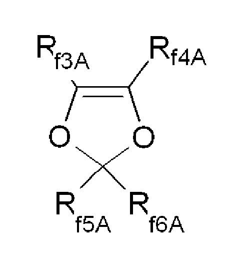
wherein each of R_{f3A}, R_{f4A}, R_{f5A}, R_{f6A}, equal of different each other, is independently a fluorine atom, a C₁-C₆ perfluoroalkyl group, optionally comprising one or more oxygen atoms, e.g. -CF₃, -C₂F₅, -C₃F₇, -OCF₃, -OCF₂CF₂OCF₃.

Even more preferred polymers (F) are TFE copolymers comprising recurring units derived from at least one perfluoromonomer (PFM) chosen among the group consisting of :
1. perfluoroalkylvinylethers complying with formula CF₂=CFOR_{f1'}, in which R_{f1'} is a C₁-C₆ perfluoroalkyl, e.g. -CF₃, -C₂F₅, -C₃F_{7;} and/or
2. perfluoro-oxyalkylvinylethers complying with formula CF₂=CFOX₀, in which X₀ is a C₁-C₁₂ perfluorooxyalkyl having one or more ether groups, like perfluoro-2-propoxy-propyl; and/or
3. C₃-C₈ perfluoroolefins, such as hexafluoropropylene.
4. per(halo)fluorodioxoles of formula : 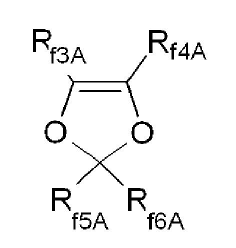
wherein each of R_{f3A}, R_{f4A}, R_{f5A}, R_{f6A}, equal of different each other, is independently a fluorine atom, a C₁-C₆ perfluoroalkyl group, optionally comprising one or more oxygen atoms, e.g. -CF₃, -C₂F₅, -C₃F₇, -OCF₃, -OCF₂CF₂OCF₃, preferably a per(halo)fluorodioxole as above described, wherein R_{f3A} and R_{f4A} are fluorine atoms and R_{f5A} and R_{f6A} are perfluoromethyl groups (-CF₃) [perfluoro-2,2-dimethyl-1 ,3-dioxole (PDD)], or wherein R_{f3}, R_{f5} and R_{f6} are fluorine atoms and R_{f4} is a perfluoromethoxy group (-OCF₃)
[2,2,4-trifluoro-5-trifluoromethoxy-1,3-dioxole or perfluoromethoxydioxole (MDO)].

Even more preferably, polymer (F) is chosen among TFE copolymers comprising recurring units derived from at least one perfluoroalkylvinylether (PAVE) complying with formula CF₂=CFOR_{f1',} in which R_{f1'} is a C₁-C₆ perfluoroalkyl (TFE/PAVE copolymers, herein below).

The expression "at least one perfluoroalkylvinylether" is understood to mean that the TFE/PAVE copolymer can comprise recurring units derived from one or more than one perfluoroalkylvinylether as above described.

As used herein, the term perfluoroalkylvinylether is understood, for the purposes of the present invention, both in the plural and the singular.

Good results have been obtained with TFE/PAVE copolymers comprising recurring units derived from at least one perfluoroalkylvinylether complying with formula CF₂=CFOR_{f7'}, in R_{f7'} is a group chosen among -CF₃, -C₂F₅, -C ₃F₇.

Excellent results have been obtained with TFE/PAVE copolymers comprising recurring units derived from perfluoromethylvinylether (of formula CF₂=CFOCF₃) (MVE, hereinafter) or perfluoropropylvinylether (of formula CF₂=CFOC₃F₇) (PVE, hereinafter).

TFE/PAVE copolymers may also comprise recurring units derived from at least one perfluoromonomer different from TFE and perfluoroalkylvinylether as above described. In particular, TFE/PAVE copolymers may comprise recurring units derived from perfluoro-oxyalkylvinylethers as above described, and/or C₃-C₈ perfluoroolefins as above described (e.g. hexafluoropropylene), and/or per(halo)fluorodioxoles as above described.

According to the most preferred embodiment of the invention, the polymer (F) is advantageously chosen among TFE/PAVE copolymers consisting essentially of recurring units derived from TFE and at least one perfluoroalkylvinylether as above detailed.

It is understood that the TFE/PAVE copolymers of this most preferred embodiment can comprises other moieties, such as end-groups, defects and the like, which do not substantially affect the properties of said materials.

According to this most preferred embodiment of the invention, the polymer (F) is preferably a copolymer consisting essentially of recurring units derived from TFE and from MVE or PVE.

Optionally the (per)fluoroelastomer composition of the invention may comprise other conventional additives, such as fillers, thickeners, pigments, antioxidants, stabilizers, processing aids, and the like.

The polymer (F) particles are generally comprised in the (per)fluoroelastomer composition of the invention in amount of at least 2 %, preferably at least 3 %, more preferably at least 5 % by weight, with respect to the weight of (per)fluoroelastomer (A).

The polymer (F) particles are generally comprised in the (per)fluoroelastomer composition of the invention in amount of at most 90 %, preferably at most 70 %, more preferably at most 50 %, still more preferably at most 30 %, by weight, with respect to the weight of (per)fluoroelastomer (A).

The invention also pertains to a process for the manufacture of the (per)fluoroelastomer composition as above described.

The process comprises advantageously mixing the (per)fluoroelastomer (A) with particles of polymer (F). Preferably, the process comprises mixing a latex comprising particles of polymer (F) with a latex of (per)fluoroelastomer (A), and then coagulating said mixture of latices. Alternatively, the process comprises a first step, wherein the polymer (F) is manufactured by emulsion (preferably micro-emulsion) polymerization, in order advantageously to obtain a latex of the polymer (F) having required nano-metric size, followed by a second step comprising polymerizing the (per)fluoroelastomer (A) in the presence of the said latex of polymer (F), the coagulation generally being performed in the final stage. In this way, the (per)fluoroelastomer (A) covers the particles of polymer (F). In this case, the (per)fluoroelastomer composition advantageously has a core/shell form in which the polymer (F) constitutes the core, while the (per)fluoroelastomer (A) forms the shell.

The invention also pertains to the use of the (per)fluoroelastomer composition as above described for fabricating shaped articles.

The (per)fluoroelastomer composition can then be fabricated, e.g. by moulding (injection moulding, extrusion moulding), calendering, or extrusion, into the desired shaped article, which is advantageously subjected to vulcanization (curing) during the processing itself and/or in a subsequent step (post-treatment or post-cure), advantageously transforming the relatively soft, weak, fluoroelastomer composition into a finished article made of non-tacky, strong, insoluble, chemically and thermally resistant cured fluoroelastomer composition.

The invention finally pertains to cured articles obtained from the (per)fluoroelastomer compositions of the invention. Articles are notably obtained by means of ionic curing, peroxide curing and/or mixed curing from the (per)fluoroelastomer compositions of the invention.

As manufactured articles, gaskets, pipes, fittings, shaft seals and oil seal rings can be mentioned.

When the (per)fluoroelastomer compositions of the present invention are cured by peroxide route, (per)fluoroelastomer preferably contains iodine and/or bromine atoms in the chain and/or at the end of the macromolecules. The introduction of these iodine and/or bromine atoms may be obtained:
- by addition during (per)fluoroelastomer manufacture to the polymerization medium of brominated and/or iodinated cure-site comonomers, such as bromo and/or iodo olefins containing from 2 to 10 carbon atoms (as described, for example, in US 4 035 565 and US 4 694 045), or iodo and/or bromo fluoroalkyl vinyl ethers (as described in patents US 4 745 165, US 4 564 662 and EP 199 138), in amounts such that the content of cure-site comonomers in the fluoroelastomer (A) is generally between 0.05 and 2 mol per 100 mol of the other base monomer units; or
- via addition during (per)fluoroelastomer manufacture of iodinated and/or brominated chain-transfer agent(s) to the polymerization medium, for instance compounds of formula R_{f}(I)ₓ(Br)_{y}, in which R_{f} is a (per)fluoroalkyl or a (per)fluorochloroalkyl containing from 1 to 8 carbon atoms, while x and y are integers between 0 and 2, with 1 ≤ x+y ≤ 2 (see, for example, patents US 4 243 770 and US 4 943 622) or alkali metal or alkaline-earth metal iodides and/or bromides, as described in patent US 5 173 553.

The peroxide curing is performed according to known techniques via addition of suitable peroxide that is capable of generating radicals by thermal decomposition. Among most commonly used agents, mention can be made of: dialkyl peroxides, for instance di-tert-butyl peroxide and 2,5-dimethyl-2,5-bis(tert-butylperoxy)hexane; dicumyl peroxide; dibenzoyl peroxide; di-tert-butyl perbenzoate; bis[1,3-dimethyl-3-(tert-butylperoxy)butyl] carbonate. Other suitable peroxide systems are those described, notably, in patent applications EP 136 596 and EP 410 351.

Other ingredients generally added to the curable compound comprising the compositions of the invention, when curing via peroxidic route, are :
(a) curing coagents, in amounts generally of between 0.5 % and 10 % and preferably between 1 % and 7 % by weight relative to the polymer; among these agents, the following are commonly used : triallyl cyanurate; triallyl isocyanurate (TAIC); tris(diallylamine)-s-triazine; triallyl phosphite; N,N-diallylacrylamide; N,N,N',N'-tetraallylmalonamide; trivinyl isocyanurate; 2,4,6-trivinyl methyltrisiloxane; bis-olefins, as notably described in European patent application EP 769 520; triazines described in European patent applications EP 860 436 and WO 97/05122; TAIC being particularly preferred;
(b) optionally, a metallic compound, in amounts of between 1 % and 15 % and preferably between 2 % and 10 % by weight relative to the weight of the polymer, chosen from oxides or hydroxides of divalent metals, for instance Mg, Zn, Ca or Pb, optionally combined with a salt of a weak acid, for instance Ba, Na, K, Pb, Ca stearates, benzoates, carbonates, oxalates or phosphites;
(c) optionally, acid acceptors of the metal non-oxide type, such as 1,8-bis(dimethylamino)naphthalene, octadecylamine, etc., as described in EP 708 797;
(d) optionally, other conventional additives, such as fillers, thickeners, pigmen-ts, antioxidants, stabilizers, processing aids, and the like.

When the (per)fluoroelastomer comprises recurring units comprising cyanide groups, the curing of the compositions thereof can be also performed using organotin compounds or biaromatic amine compounds as crosslinking agents, as notably described in patents US 4 394 489, US 5 767 204 and US 5 789 509. This type of curing may be combined with peroxide-type curing, when the fluoroelastomer (A) also comprises iodine or bromine atoms, preferably in terminal positions, as described in patent US 5 447 993.

The ionic curing can be performed via addition of curing agents and accelerators as well known in the art. The amounts of accelerators are between 0.05-5 phr and the curing agent between 0.5-15 phr and preferably 1-6 phr.

Aromatic or aliphatic polyhydroxylated compounds, or derivatives thereof, may be used as curing agents, as described, for example, in EP 335 705 and US 4 233 427. Among these, mention will be made in particular of : dihydroxy, trihydroxy and tetrahydroxy benzenes, naphthalenes or anthracenes; bisphenols, in which the two aromatic rings are linked together via an aliphatic, cycloaliphatic or aromatic divalent radical, or alternatively via an oxygen or sulphur atom, or else a carbonyl group. The aromatic rings may be substituted with one or more chlorine, fluorine or bromine atoms, or with carbonyl, alkyl or acyl groups. Bisphenol AF is particularly preferred.

Examples of accelerators that may be used include: quaternary ammonium or phosphonium salts (see, for example, EP 335 705 and US 3 876 654); aminophosphonium salts (see, for example, US 4 259 463); phosphoranes (see, for example, US 3 7-52 787); the imine compounds described in EP 182 299 and EP 120 462; etc. Quaternary phosphonium salts and aminophosphonium salts are preferred.

Instead of using the accelerator and the curing agent separately, it is also possible to use an adduct between an accelerator and a curing agent in a mole ratio of from 1:2 to 1:5 and preferably from 1:3 to 1:5, the accelerator being one of the organic onium compounds having a positive charge, as defined above, and the curing agent being chosen from the compounds indicated above, in particular dihydroxy or polyhydroxy or dithiol or polythiol compounds; the adduct being obtained by melting the product of reaction between the accelerator and the curing agent in the indicated mole ratios, or by melting the mixture of the 1:1 adduct supplemented with the curing agent in the indicated amounts. Optionally, an excess of the accelerator, relative to that contained in the adduct, may also be present.

The following are particularly preferred as cations for the preparation of the adduct : 1,1-diphenyl-1-benzyl-N-diethylphosphoranamine and tetrabutylphosphonium; particularly preferred anions are bisphenol compounds in which the two aromatic rings are bonded via a divalent radical chosen from perfluoroalkyl groups of 3 to 7 carbon atoms, and the OH groups are in the para position. The preparation of the adduct is described in European patent application EP 684 277 in the name of the Applicant, which is included herein in its entirety by reference.

Other ingredients generally added to the curable compound comprising the compositions of the invention, when curing via ionic route are :
i) one or more mineral acid accelerators chosen from those known in the ionic curing of vinylidene fluoride copolymers, in amounts of 1-40 parts per 100 parts of fluoroelastomer;
ii) one or more basic compounds chosen from those known in the ionic curing of vinylidene fluoride copolymers, in amounts of from 0.5 to 10 parts per 100 parts of fluoroelastomer.

The basic compounds mentioned in point ii) are commonly chosen from the group constituted by Ca(OH)₂, Sr(OH)₂, Ba(OH)₂, metal salts of weak acids, for instance Ca, Sr, Ba, Na and K carbonates, benzoates, oxalates and phosphites and mixtures of the abovementioned hydroxides with the abovementioned metal salts; among the compounds of the type i), mention may be made of MgO.

The above mentioned amounts of the mixture are relative to 100 phr of (per)fluoroelastomer (A).

Also, other conventional additives, such as fillers, thickeners, pigments, antioxidants, stabilizers and the like, may then be added to the curing mixture.

The (per)fluoroelastomer compositions of the present invention may also be cured via a mixed route combining the two types of curing.

The present invention will be now described in more detail with reference to the following examples, whose purpose is merely illustrative and not limitative of the scope of the invention.

**Raw materials**

Commercially available fluoroelastomer latex TECNOFLON^{®} PFR 95HT from Solvay Solexis S.p.A. has been used in all examples (A-1, herein below).

**Mechanical and sealing property determination on cured samples**

130 x 130 x 2 mm plaques and O-rings (size class = 214) have been cured in a pressed mould and then post-treated in an air circulating oven in conditions (time, temperature) specified in the Examples.
The tensile properties have been determined on specimens punched out from the plaques, according to the ASTM D 412 method, method C.
M 100 is the tensile strength in MPa at an elongation of 100 %
T.S. is the tensile strength in MPa;
E.B. is the elongation at break in %.
The Shore A hardness (3") (HDS) has been determined on 3 pieces of plaque piled according to the ASTM D 2240 method.
The compression set (C-SET) has been determined on O-ring (class: 214), according to the ASTM D 329 method.

### Example 1

**1 a) Manufacture of polymer (F-1)**
   In a 5 litres autoclave equipped with a mechanical stirrer operating at 630 rpm, 3 I of demineralized water, and 90 ml of a microemulsion, previously obtained by mixing 19.5 ml of a perfluoropolyoxyalkylene having acidic end groups of formula: CF₂ClO(CF₂-CF(CF₃)O)ₙ(CF₂O)ₘCF₂COOH, wherein n/m = 10, having average molecular weight of 600, 19.5 ml of a 30 % v/v NH₄OH aqueous solution, 39 ml of demineralised water and 12 ml of GALDEN^{®} D02 perfluoropolyether of formula: C-F₋₃-O(CF₂CF(CF₃)O)ₙ(CF₂O)ₘCF₃ with n/m = 20, having average molecular weight of 450, were introduced. Autoclave was heated and maintained at set-point temperature of 80°C. Ethane was introduced until partial pressure of 0.7 bar (0.07 MPa); a mixture of perfluoromethylvinylether (MVE) (6.5 % moles) and tetrafluoroethylene (TFE) (93.5% moles) was then added for reaching a final pressure of 20 bar (2 MPa). Reaction was initiated by addition of 0.15 g of ammonium persulfate. Pressure was maintained at setpoint by continuous feeding of a gaseous mixture of MVE (2% moles) and TFE (98 % moles). After having converted about 1 kg of monomers, vessel was cooled, vented and latex recovered. Properties of the so-obtained latex are summarized in table 1.
**1 b) Mixing of F-1 with fluoroelastomer A-1**
   Polymer F-1 and fluoroelastomer A-1 were latex-mixed as described in EP 1031607 A (AUSIMONT SPA) 30.08.2000.
   Curing recipe and conditions and properties of cured sample are summarized in table 2.

**Example 2**
**2a) Manufacture of polymer (F-2)**
   Same procedure as detailed in Example 1 a) was repeated, but using 3.5 I of water, 35 ml of microemulsion, 0.175 g of ammonium persulfate, and
   0.5 bar of ethane. 1500g of polymer were produced. Properties of the so-obtained latex are summarized in table 1.
**2 b) Mixing of F-1 with fluoroelastomer A-1**
   Polymer F-2 and fluoroelastomer A-1 were latex-mixed as described in EP 1031607 A (AUSIMONT SPA) 30.08.2000.
   Curing recipe and conditions and properties of cured sample are summarized in table 2.

**Example 3 (Comparative)**
**3a) Manufacture of polymer (F-3)**
   Same procedure as detailed in Example 1 a) was repeated, but using 1.5 bar of ethane. Properties of the so-obtained latex are summarized in table 1.
**3 b) Mixing of F-1 with fluoroelastomer A-1**
   Polymer F-3 and fluoroelastomer A-1 were latex-mixed as described in EP 1031607 A (AUSIMONT SPA) 30.08.2000.
   Curing recipe and conditions and properties of cured sample are summarized in table 2.

**Example 4 (Comparative)**
A fluoropolymer latice available as HYFLON^{®} XPH6001 from Solvay Solexis S.p.A., whose properties are summarized in Table 1, was used. Polymer F-1 and fluoroelastomer A-1 were latex-mixed as described in EP 1031607 A (AUSIMONT SPA) 30.08.2000.
Curing recipe and conditions and properties of cured sample are summarized in table 2.

**Table 1**

| | | F1 | F2 | F3 | F4 |
|---|---|---|---|---|---|
| Melt Flow Index | (g/10 min) | 2.6 | 1.8 | 70 | 4.1 |
| Average Particle Size | (nm) | 37 | 63 | 40 | 166 |
| Polymer (F) | (TFE % mol) | 98 | 98 | 98 | 98.5 |
| composition | (MVE % mol) | 2 | 2 | 2 | 1.5 |

**Table 2**

| | | Ex.1 | Ex.2 | Ex.3c | Ex.4c |
|---|---|---|---|---|---|
| A-1 | wt parts | 90 | 90 | 90 | 90 |
| F-1 | wt parts | 10 | - | - | - |
| F-2 | wt parts | - | 10 | - | - |
| F-3 | wt parts | - | - | 10 | - |
| F-4 | wt parts | - | - | - | 10 |
| Bis-olefin¹ | phr | 1.5 | 1.5 | 1.5 | 1.5 |
| Luperox^{®} 101² | phr | 1 | 1 | 1 | 1 |

| Mooney Viscosity | | | | | |
|---|---|---|---|---|---|
| ML(1+10) @ 121 °C | MU | 104 | 97 | 94 | 97 |
| Moulding/curing: min @ °C and post-cure: (8+16)h @ 230°C | | | | | |

| Mechanical properties after post-curing | | | | | |
|---|---|---|---|---|---|
| T.S. | MPa | 14.6 | 15.7 | 15.0 | 13.1 |
| M 100 | MPa | 4.2 | 3.9 | 2.7 | 2.5 |
| E.B. | % | 237 | 246 | 284 | 252 |
| HDS | Shore A | 68 | 66 | 66 | 63 |

| Compression set after post-cure 70 h @ 200°C on class 214 O-ring | | | | | |
|---|---|---|---|---|---|
| C-SET | % | 22 | 22 | 24 | 24 |

**1:** bis-olefin having formula: CH₂=CH-(CF₂)₆-CH=CH₂
**2:** 2,5-dimethyl-2,5-di-t-butyl-peroxy-hexane, commercially available from Arkema.

Data of Table 2 have surprisingly shown, *inter alia,* that the incorporation of polymer (F) particles simultaneously having a melt flow index of less than 10 g/10 min and an average particle size of less than 100 nm is particularly advantageous, as mechanical properties of the (per)fluoropolymer composition, in particular elastic modulus/elongation at break ratio, are further improved (Ex. 1 and 2 vs. Ex. 3 and 4), with substantially no change in sealing properties (C-SET).

## Claims

1. A (per)fluoroelastomer composition comprising at least one (per)fluoroelastomer [(per)fluoroelastomer (A)] matrix comprising particles of at least one perfluoropolymer [polymer (F)] having a melt flow index (MFI), measured at 372°C under a 5 Kg load according to ASTM D1238 standard, of less than 10 g/10 min, said particles having an average size of less than 100 nm.

2. The composition according to claim 1 wherein the (per)fluoroelastomer (A) is selected among:
(1) vinylidene fluoride (VDF)-based copolymers, in which VDF is copolymerized with at least one comonomer chosen from the followings classes :
(a) C₂-C₈ perfluoroolefins , such as tetrafluoroethylene (TFE), hexafluoropropylene (HFP), hexafluoroisobutylene;
(b) hydrogen-containing C₂-C₈ olefins, such as vinyl fluoride (VF), trifluoroethylene (TrFE), perfluoroalkyl ethylenes of formula CH₂ = CH-R_{f}, wherein R_{f} is a C₁-C₆ perfluoroalkyl group;
(c) C₂-C₈ chloro and/or bromo and/or iodo-fluoroolefins such as chlorotrifluoroethylene (CTFE);
(d) (per)fluoroalkylvinylethers (PAVE) of formula CF₂ = CFOR_{f}, wherein R_{f} is a C₁-C₆ (per)fluoroalkyl group, e.g. CF₃, C₂F₅, C₃F₇;
(e) (per)fluoro-oxy-alkylvinylethers of formula CF₂ = CFOX, wherein X is a C₁ -C₁₂ ((per)fluoro)-oxyalkyl comprising catenary oxygen atoms, e.g. the perfluoro-2-propoxypropyl group;
(f) (per)fluorodioxoles having formula : 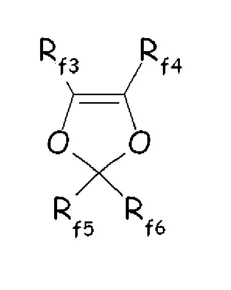 wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atoms, such as notably -CF₃, -C₂F₅, -C₃F₇, -OCF₃, -OCF₂CF₂OCF₃; preferably, perfluorodioxoles;
(g) (per)fluoro-methoxy-vinylethers (MOVE, hereinafter) having formula: CFX₂ = CX₂OCF₂OR"_{f}
wherein R"_{f} is selected among C₁-C₆ (per)fluoroalkyls , linear or branched; C₅ -C₆ cyclic (per)fluoroalkyls; and C₂-C₆ (per)fluorooxyalkyls, linear or branched, comprising from 1 to 3 catenary oxygen atoms, and X₂ = F, H; preferably X₂ is F and R"_{f} is -CF₂CF₃ (MOVE1); -CF₂CF₂OCF₃ (MOVE2); or -CF₃ (MOVE3);
(h) C₂-C₈ non-fluorinated olefins (OI), for example ethylene and propylene; and
(2) TFE-based copolymers, in which TFE is copolymerized with at least one comonomer chosen from classes (c), (d), (e), (g) (h) as above detailed, and the followings:
(i) perfluorovinyl ethers containing cyanide groups.

3. The composition according to claim 2, wherein the (per)fluoroelastomer (A) has one of the following compositions (in mol %) :
(i) vinylidene fluoride (VDF) 35-85 %, hexafluoropropene (HFP) 10-45 %, tetrafluoroethylene (TFE) 0-30 %, perfluoroalkyl vinyl ethers (PAVE) 0-15 %;
(ii) vinylidene fluoride (VDF) 50-80 %, perfluoroalkyl vinyl ethers (PAVE) 5-50 %, tetrafluoroethylene (TFE) 0-20 %;
(iii) vinylidene fluoride (VDF) 20-30 %, C₂-C₈ non-fluorinated olefins (OI) 10-30 %, hexafluoropropene (HFP) and/or perfluoroalkyl vinyl ethers (PAVE) 18-27 %, tetrafluoroethylene (TFE) 10-30 %;
(iv) tetrafluoroethylene (TFE) 50-80 %, perfluoroalkyl vinyl ethers (PAVE) 20-50 %;
(v) tetrafluoroethylene (TFE) 45-65 %, C₂-C₈ non-fluorinated olefins (OI) 20-55 %, vinylidene fluoride 0-30 %;
(vi) tetrafluoroethylene (TFE) 32-60 % mol %, C₂-C₈ non-fluorinated olefins (OI) 10-40 %, perfluoroalkyl vinyl ethers (PAVE) 20-40 %, fluorovinyl ethers (MOVE) 0-30 %;
(vii) tetrafluoroethylene (TFE) 33-75 %, perfluoroalkyl vinyl ethers (PAVE) 15-45 %, vinylidene fluoride (VDF) 5-30 %, hexafluoropropene HFP 0-30 %;
(viii) vinylidene fluoride (VDF) 35-85 %, fluorovinyl ethers (MOVE) 5-40 %, perfluoroalkyl vinyl ethers (PAVE) 0-30 %, tetrafluoroethylene (TFE) 0-40 %, hexafluoropropene (HFP) 0-30 %;
(ix) tetrafluoroethylene (TFE) 20-70 %, fluorovinyl ethers (MOVE) 30-80 %, perfluoroalkyl vinyl ethers (PAVE) 0-50 %.

4. Composition according to anyone of the preceding claims, wherein the polymer (F) is a tetrafluoroethylene (TFE) copolymer comprising recurring units derived from TFE and from at least one other perfluoromonomer (PFM) chosen among:
- C₃-C₈ perfluoroolefins, such as hexafluoropropene (HFP);
- chloro- and/or bromo- and/or iodo- C₂-C₆ per(halo)fluoroolefins, like chlorotrifluoroethylene (CTFE);
- per(halo)fluoroalkylvinylethers complying with general formula CF₂=CFOR_{f3} in which R_{f3} is a C₁-C₆ per(halo)fluoroalkyl, such as -CF₃, -C₂F₅, -C₃F₇;
- per(halo)fluoro-oxyalkylvinylethers complying with general formula CF₂ =CFOX₀₁, in which X₀₁ is a C₁-C₁₂ per(halo)fluorooxyalkyl having one or more ether groups, like perfluoro-2-propoxy-propyl group;
- per(halo)fluoro-methoxy-alkylvinylethers complying with general formula CF₂ =CFOCF₂OR_{f4} in which R_{f4} is a C₁-C₆ per(halo)fluoroalkyl, such as -CF₃, -C₂F₅,
- C₃F₇ or a C₁-C₆ per(halo)fluorooxyalkyl having one or more ether groups, such as -C₂F₅-O-CF₃;
- per(halo)fluorodioxoles of formula : 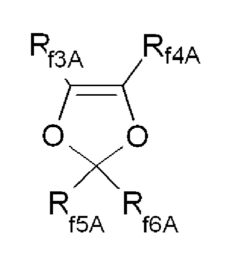
wherein each of R_{f3A}, R_{f4A}, R_{f5A}, R_{f6A}, equal of different each other, is independently a fluorine atom, a C₁-C₆ perfluoroalkyl group, optionally comprising one or more oxygen atoms, e.g. -CF₃, -C₂F₅, -C₃F₇, -OCF₃, -OCF₂ CF₂OCF₃.

5. Composition according to anyone of the preceding claims, wherein the polymer (F) is chosen among TFE copolymers comprising recurring units derived from at least one perfluoroalkylvinylether (PAVE) complying with formula CF₂ =CFOR_{f1'}, in which R_{f1'} is a C₁-C₆ perfluoroalkyl (TFE/PAVE copolymers).

6. Composition according to anyone of the preceding claims, wherein the polymer (F) is a copolymer consisting essentially of recurring units derived from TFE and from perfluoromethylvinylether (MVE).

7. Composition according to anyone of the preceding claims, wherein the polymer (F) has an average particle size from 10 to 90 nm, preferably from 20 to 70 nm.

8. Composition according to anyone of the preceding claims, wherein the polymer (F) has an MFI of less than 8 g/10 min, more preferably less than 5 g/10 min.

9. A process for the manufacture of the composition according to anyone of the preceding claims.

10. The process of claim 9, said process comprising mixing a latex comprising particles of polymer (F) with a latex of (per)fluoroelastomer (A), and then coagulating said mixture of latices.

11. The process of claim 9, said process comprising a first step, wherein the polymer (F) is manufactured by emulsion (preferably micro-emulsion) polymerization, in order advantageously to obtain a latex of the polymer (F) having required nano-metric size, followed by a second step comprising polymerizing the (per)fluoroelastomer (A) in the presence of the said latex of polymer (F), the coagulation being performed in the final step.

12. Use of the (per)fluoroelastomer composition according to anyone of claims 1 to 8 for fabricating shaped articles.

13. Cured articles obtained from the (per)fluoroelastomer compositions according to anyone of claims 1 to 8.

14. Articles of claim 13 obtained by means of ionic curing, peroxide curing and/or mixed curing from the (per)fluoroelastomer compositions according to anyone of claims 1 to 8.
